# EUROPÄISCHE PATENTANMELDUNG

(11) **EP 4 467 514 A1**
(43) Veröffentlichungstag der Anmeldung: **27.11.2024**
(21) Anmeldenummer: 23175674.3
(22) Anmeldetag: 26.05.2023
(51) Int. Cl.: C01B 3/02, C01B 3/38, C01B 3/48, C01B 3/50, C01B 3/52, C01B 3/56, C01C 1/04

(54) **VERFAHREN UND ANLAGE ZUR HERSTELLUNG VON AMMONIAK**

(71) Anmelder: GasConTec GmbH, 61348 Bad Homburg v. d. Höhe (DE)
(72) Erfinder: LAUER, Wolfgang, 34613 Schwalmstadt (DE); RAPPOLD, Dorit, 60437 Frankfurt (DE); WAGNER, Ulrich, 06406 Bernburg, OT Biendorf (DE)
(74) Vertreter: Patentanwälte Bauer Vorberg Kayser

(57) **Zusammenfassung**

Die Erfindung betrifft ein Verfahren zur Herstellung von Ammoniak (1) in einer Anlage (2) zur Herstellung von Ammoniak (1), wobei ein kohlenstoffhaltiger Energieträgerstrom (3) einer Synthesegasreaktoranordnung (4) zum Gewinnen eines Synthesegasstroms (5) mit Wasserstoff und Kohlenstoffoxiden zugeführt wird, wobei die Synthesegasreaktoranordnung (4) aus dem Energieträgerstrom (3) den Synthesegasstrom (5) durch eine autotherme Reformierung gewinnt, wobei der Synthesegasstrom (5) einer Shiftvorrichtung (15a-c) zugeführt wird, wobei in der Shiftvorrichtung (15a-c) eine Wassergas-Shift-Reaktion zur Umsetzung zumindest eines Teils des Kohlenstoffmonoxids des Synthesegasstroms (5) mit Dampf des Synthesegasstroms (5) in Kohlenstoffdioxid und Wasserstoff stattfindet, wobei der Synthesegasstrom (5) der Shiftvorrichtung (15a-c) nachgelagert zumindest teilweise einer Trennanordnung (6) zum Trennen des Synthesegasstroms (5) zumindest in einen Wasserstoffstrom (7) mit Wasserstoff und in einen Kohlenstoffoxide aufweisenden Abgasstrom (8) zugeführt wird, wobei ein Wasserstoffstrom (7) zumindest teilweise sowie ein Stickstoffstrom (9) einer Ammoniak-Reaktoranordnung (10) zugeführt und dort in Ammoniak (1) umgewandelt wird. Das Verfahren ist dadurch gekennzeichnet, dass der Energieträgerstrom (3) vor Zu-führung zur Synthesegasreaktoranordnung (4) einer Sättigungsstufe (11) zugeführt wird, in welcher Sättigungsstufe (11) dem Energieträgerstrom (3) vorgewärmtes Kondensat (12), welches in der Anlage (2) angefallen ist, zugeführt wird und dass ein Dampfanteil des Synthesegasstroms (5) bei Zuführung zu der Shiftvorrichtung (15a-c) zu mindestens 80 % bereits in der Synthesegasreaktoranordnung (4) vorhanden ist. Ebenso betrifft die Erfindung eine entsprechende Anlage (2) zur Herstellung von Ammoniak (1).

## Beschreibung

Die Erfindung betrifft ein Verfahren zur Herstellung von Ammoniak mit den Merkmalen des Oberbegriffs von Anspruch 1 sowie eine Anlage zur Herstellung von Ammoniak mit den Merkmalen des Oberbegriffs von Anspruch 16.

Ammoniak ist ein Stoff, der zunehmend Bedeutung als Medium zum Transport von Wasserstoff gewinnt. Das liegt vor allem daran, dass er sich einfacher und vor allem energetisch günstiger als reiner Wasserstoff transportieren lässt und auch sehr einfach wieder in die Bestandteile Stickstoff und Wasserstoff aufgetrennt werden kann.

In diesem Zusammenhang besteht erhöhtes Interesse daran, Ammoniak auf eine Weise herzustellen, die einen sehr kleinen CO2-Fußabdruck aufweist. Man spricht im Falle eines sogenannten "low-low carbon footprint" dann auch von "blauem" Wasserstoff bzw. "blauem" Ammoniak.

Die Herstellung von Ammoniak geht von Wasserstoff sowie Stickstoff als Ausgangsstoffen aus, wobei speziell der Wasserstoff regelmäßig durch Synthesegas bereitgestellt wird, welches Synthesegas aus einem kohlenstoffhaltigen Energieträgerstrom wie z. B. Erdgas gewonnen wird. Aus dem Synthesegas kann dann etwa durch eine PSA ein hochreiner Wasserstoffstrom gewonnen werden. Der Einsatz einer PSA verhindert Verunreinigungen in dem Gas, das für die Ammoniaksynthese verwendet wird, sodass entsprechende Reinigungsvorkehrungen bei der Ammoniaksynthese entbehrlich werden. Wesentliche Vorgänge bei der Herstellung von Ammoniak, die zur Abgabe von Kohlenstoffdioxid führen, sind einerseits die Zerlegung der Umgebungsluft zum Gewinnen des Stickstoffs. Diese Zerlegung erfordert eine bestimmte Energie, die wiederum Grund für eine CO2-Emission in die Atmosphäre sein kann.

Andererseits erfordert auch das Gewinnen des Synthesegases Energie, wobei speziell beim Einsatz eines Steamreformers zu diesem Zweck bis zu 30 % des eingesetzten Erdgases zu seiner Unterfeuerung benötigt werden. Das dabei im Rauchgas enthaltene CO2 wird in die Atmosphäre abgegeben. Ansonsten im Prozess anfallendes CO2 kann mit einer Wäsche abgetrennt und genutzt oder sequestriert werden, ohne dass es zu einer Abgabe in die Atmosphäre kommt.

Eine Verringerung der im Rauchgas emittierten Menge an CO2 entsprechend etwa 10 % des eingesetzten Erdgases lässt sich dadurch erreichen, dass anstelle eines Steamreforming ausschließlich eine autotherme Reformierung (ATR) zur Erzeugung des Synthesegases eingesetzt wird. Eine solche autotherme Reformierung ist beispielsweise in der US 2020/0055738 A1 der Casale S.A. aus dem Stand der Technik offenbart, von welcher die vorliegende Erfindung als nächstkommend ausgeht. Bei der autothermen Reformierung, bei welcher die erforderliche Temperatur durch eine katalytische partielle Oxidation erzeugt wird, ist keine externe Zufuhr von Hitze für die Erzeugung des Synthesegases erforderlich, sondern allenfalls eine Vorheizung des Energieträgerstroms durch gasgefeuerte Einsatzstofferhitzer ("fired heater") vor Zuführung zur autothermen Reformierung. Hinzu kommt, dass die ohnehin sinnvolle Luftzerlegung für die autotherme Reformierung auch gleich den Stickstoff für die Ammoniaksynthese bereitstellen kann.

Bereits sehr niedrige Emissionswerte werden erreicht, indem man das Off-Gas der PSA, das bei der Auftrennung des Synthesegases in Wasserstoff und Off-Gas anfällt, zur notwendigen Vorheizung des Synthesegases vor dem ATR nutzt. Die verbleibende Energiedifferenz wird mit entschwefeltem Erdgas ausgeglichen.

Ebenso kann, wie in der bereits genannten US 2020/0055738 A1 beschrieben wird, an den gasgefeuerten Einsatzstofferhitzern zur Verringerung der CO2-Emissionen auch dekarbonisiertes Synthesegas verwenden. Das setzt allerdings voraus, dass eine sehr effektive CO2-Wäsche eingesetzt wird, da ansonsten das noch nicht abgeschiedene CO2 im Synthesegas die Restemission wieder erhöht. Zudem bedarf es darüber hinaus noch einer weiteren Aufarbeitung des dekarbonisierten Synthesegases vor der Ammoniaksynthese, da insbesondere Methan aus dem Methanslip des ATR, welches bei der technischen Lösung gemäß der US 2020/0055738 A1 in den Ammoniaksynthesekreislauf gerät, den Hauptteil der CO2 Emission nach Verbrennung in den gasgefeuerten Einsatzstofferhitzern ausmacht. Aber auch eine solche Aufarbeitung kann nicht verhindern, dass das Methan auf die eine oder andere Weise vollständig in das Off-Gas gelangt. Eine Verringerung der Restemissionen unter den Zielwert von 0,2 t CO2 pro t Ammoniak ist damit nicht möglich.

Auch die Befeuerung der gasgefeuerten Einsatzstofferhitzer mit bereits hergestelltem, hochreinen Wasserstoff verhindert nicht das Auftreten des Methans im Off-Gas. Und es ist natürlich ineffektiv, eine PSA auf höchste Reinheit auszulegen, um dann hergestellten, hochreinen Wasserstoff wieder zu verbrennen.

Ausgehend vom Stand der Technik besteht daher die Aufgabe der Erfindung darin, einen verbesserten Ansatz für die Herstellung von Ammoniak bereitzustellen, welcher einen sehr niedrigen CO2-Fußabdruck aufweist.

Bezogen auf ein Verfahren zur Herstellung von Ammoniak gemäß dem Oberbegriff von Anspruch 1 wird diese Aufgabe durch die Merkmale des kennzeichnenden Teils von Anspruch 1 gelöst. Bezogen auf eine Anlage zur Synthese von Ammoniak gemäß dem Oberbegriff von Anspruch 16 wird diese Aufgabe durch die Merkmale des kennzeichnenden Teils von Anspruch 16 gelöst.

Der Erfindung liegt die Erkenntnis zugrunde, dass insgesamt die Menge an emittiertem CO2 in einer Anlage zur Synthese von Ammoniak mit einer autothermen Reformierung überraschenderweise dadurch verringert werden kann, dass das molare Dampf-zu-Kohlenstoff-Verhältnis (S/C-Verhältnis) in dem ATR dadurch erhöht wird, dass im Prozess anfallendes und mit Prozessabwärme vorgeheiztes Prozesskondensat mittels einer Sättigungsstufe dem ebenfalls vorgeheizten Erdgas zugeführt wird. Die Verwendung von Prozesskondensat in einer Sättigungsstufe anstelle der Zuführung von Hochdruckdampf führt zur Ersparnis der Energie, die für die Erzeugung des Hochdruckdampfs notwendig wäre. Durch die Erhöhung des molaren S/C-Verhältnisses wird zudem erreicht, dass die im Gesamtprozess erzeugte Dampfmenge ausreicht, um die Anlage ohne Import von Strom zu betreiben und die zusätzliche Produktion von Hochdruckdampf zu vermeiden. Ferner wird einerseits der Methanslip entscheidend verringert, sodass der dann als CO2 auftretende Kohlenstoff des auf diese Weise verhinderten Methans im Synthesegasstrom durch die CO2-Wäsche aus dem Prozesskreislauf entfernt werden kann und folglich nicht in die Atmosphäre freigesetzt wird. Andererseits verschiebt sich durch das höhere S/C-Verhältnis auch das Reaktionsgleichgewicht bei einer nachfolgenden Wassergas-Shift-Reaktion des Synthesegases in Richtung des Kohlenstoffdioxids, sodass der Anteil an Kohlenstoffmonoxid im Synthesegas verringert wird. Im Ergebnis verringert das auch die CO2-Emissionen, denn das durch die Shiftreaktion gewonnene Kohlenstoffdioxid kann ausgewaschen und der ebenfalls gewonnene Wasserstoff entweder für die Ammoniaksynthese oder für die CO2-freie Unterfeuerung der gasgefeuerten Einsatzstofferhitzer verwendet werden. Besonders vorteilhaft ist, wenn soviel Kondensat über den Sättiger vor dem ATR zugesetzt werden kann, dass sich das optimale Dampf-zu-C-Verhältnis für die Shiftreaktion einstellt.

Die bevorzugten Ausführungsbeispiele der Unteransprüche 3 und 4 betreffen die Möglichkeit, die Wassergas-Shift-Reaktion in mehreren Stufen mit jeweils unterschiedlichen Temperaturbereichen durchzuführen, wodurch eine besonders gründliche Umwandlung von Kohlenstoffmonoxid in Kohlenstoffdioxid erreicht werden kann, welcher dann aus dem Synthesegas ausgewaschen werden kann.

Die bevorzugten Ausführungsbeispiele der Unteransprüche 5 bis 7 betreffen vorteilhafte Maßnahmen zum Gewinnen von Prozesskondensat in der Anlage.

Schließlich zeigen die bevorzugten Ausführungsbeispiele der Unteransprüche 13 und 14 wie die Adsorptionsvorrichtung so betrieben werden kann, dass ausreichend Wasserstoff zum Betrieb der gasgefeuerten Einsatzstofferhitzer gewonnen werden kann und daher die Verwendung von Erdgas entbehrlich wird.

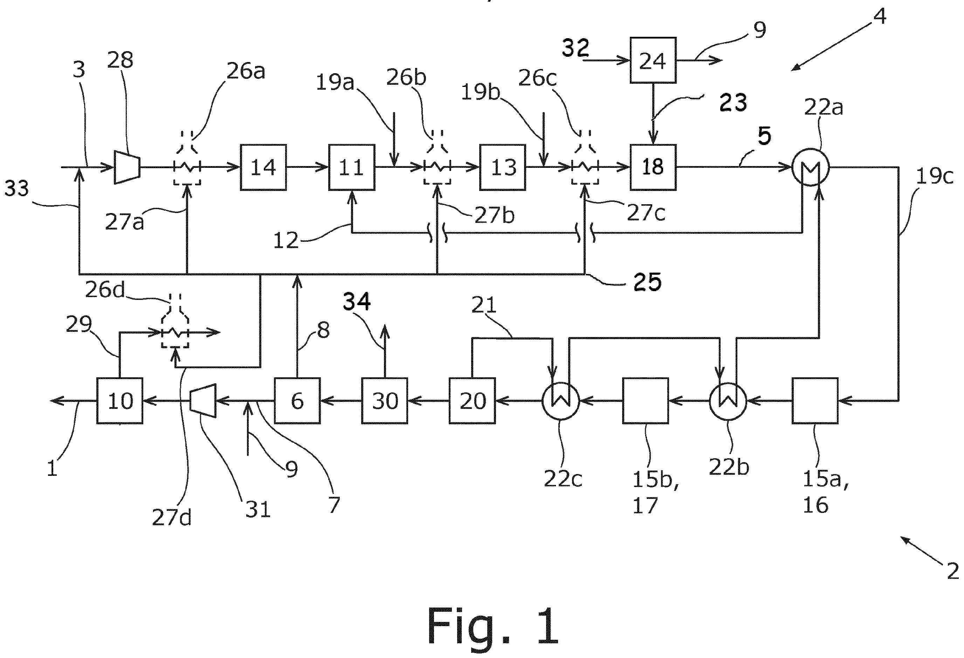

Weitere Einzelheiten, Merkmale, Ausgestaltungen, Ziele und Vorteile der vorliegenden Erfindung werden nachfolgend anhand der lediglich Ausführungsbeispiele wiedergebenden Zeichnung erläutert. In der Zeichnung zeigt
- Fig. 1: schematisch das Fließbild einer vorschlagsgemäßen Anlage zur Ausführung des vorschlagsgemäßen Verfahrens gemäß einem Ausführungsbeispiel.

Das vorschlagsgemäße Verfahren dient der Herstellung von Ammoniak 1 in einer Anlage 2 zur Herstellung von Ammoniak 1. Bei dem vorschlagsgemäßen Verfahren wird ein kohlenstoffhaltiger Energieträgerstrom 3 einer Synthesegasreaktoranordnung 4 zum Gewinnen eines Synthesegasstroms 5 mit Wasserstoff und Kohlenstoffoxiden zugeführt, wobei die Synthesegasreaktoranordnung 4 aus dem Energieträgerstrom 3 den Synthesegasstrom 5 durch eine autotherme Reformierung gewinnt. Hier stellt eine insbesondere katalytische partielle Oxidation die für die endothermen Reformierungsreaktionen erforderliche Wärme bereit. Insbesondere kann die Synthesegasreaktoranordnung 4 eine Synthesegasreaktorstufe 18 zum Gewinnen des Synthesegasstroms 5 aufweisen. Vorzugsweise umfasst die Anlage 2 die Synthesegasreaktoranordnung 4. Vorzugsweise umfasst der Energieträgerstrom 3 Erdgas oder besteht sogar im Wesentlichen aus Erdgas.

Bei dem vorschlagsgemäßen Verfahren wird der Synthesegasstrom 5 einer Shiftvorrichtung 15a-c zugeführt, wobei in der Shiftvorrichtung 15a-c eine Wassergas-Shift-Reaktion zum Umsetzung zumindest eines Teils des Kohlenstoffmonoxids des Synthesegasstroms 5 mit Dampf des Synthesegasstroms 5 in Kohlenstoffdioxid und Wasserstoff stattfindet. Erkennbar umfasst der Synthesegasstrom 5 also Wasser.

Bei dem vorschlagsgemäßen Verfahren wird weiter der Synthesegasstrom 5 der Shiftvorrichtung 15a-c prozesstechnisch nachgelagert zumindest teilweise einer Trennanordnung 6 zum Trennen des Synthesegasstroms 5 zumindest in einen Wasserstoffstrom 7 mit Wasserstoff und in einen Kohlenstoffoxide aufweisenden Abgasstrom 8 zugeführt wird, wobei der Wasserstoffstrom 7 zumindest teilweise sowie ein Stickstoffstrom 9 einer Ammoniak-Reaktoranordnung 10 zugeführt und dort in Ammoniak 1 umgewandelt wird. Anders ausgedrückt wird der Synthesegasstrom 5 der Trennanordnung 6 zugeführt, nachdem er der Shiftvorrichtung 15a-c zugeführt wurde. Dabei ist es nicht erforderlich und vorliegend auch nicht der Fall, dass der Synthesegasstrom 5 prozesstechnisch unmittelbar nach der Shiftvorrichtung 15a-c der Trennanordnung 6 zugeführt wird. Insbesondere ist eine unten näher beschriebene Kohlenstoffdioxidwäsche 30 zwischen der Shiftvorrichtung 15a-c und der Trennanordnung 6 vorgesehen. Es wird also der Wasserstoffstrom 7 zumindest teilweise der Ammoniak-Reaktoranordnung 10 zugeführt. Es kann sein, dass mehr als ein Wasserstoffstrom 7 sowie ggf. weitere Ströme aus der Trennanordnung 6 durch Trennen des Synthesegasstroms 5 gewonnen werden. In diesem Fall können auch die weiteren Wasserstoffströme 7 ganz oder teilweise der Ammoniak-Reaktoranordnung 10 zugeführt werden. Vorzugsweise umfasst die Anlage 2 die Trennanordnung 6, die Shiftvorrichtung 15a-c und/oder die Ammoniak-Reaktoranordnung 10.

Vorzugsweise werden der Wasserstoffstrom 7 und der Stickstoffstrom 9 zusammengeführt und anschließend der Ammoniak-Reaktoranordnung 10 zugeführt. Insbesondere kann ein Ammoniak-Synthesegaskompressor 31 der Anlage 2 zur vorzugsweise gemeinsamen Druckerhöhung des Wasserstoffstroms 7 und des Stickstoffstroms 9 vorgesehen sein.

Die autotherme Reformierung hat u.a. den Vorteil, dass sie zu einem hohen Druck des gewonnenen Synthesegasstroms 5 führt. Daher ist es bevorzugt, dass der Synthesegasstrom 5 von der Synthesegasreaktoranordnung 4 zur Trennanordnung 6 druckerhöhungsfrei geführt wird. Anders ausgedrückt findet keine Druckerhöhung des Synthesegasstroms 5 zwischen der Synthesegasreaktoranordnung 4 und der Trennanordnung 6 statt, wodurch die erheblichen Kosten für eine Kompressorstufe eingespart werden können.

Die Trennanordnung 6 kann unterschiedliche Arten von Vorrichtungen umfassen. Gemäß einer ersten Möglichkeit umfasst die Trennanordnung 6 eine Adsorptionsvorrichtung zum Abtrennen von Wasserstoff, wobei es sich insbesondere - wie bei dem vorliegenden Ausführungsbeispiel - um eine Druckwechsel-Adsorptionsvorrichtung oder um eine Temperaturwechsel-Adsorptionsvorrichtung handeln kann. Alternativ oder zusätzlich kann die Trennanordnung auch eine Membranvorrichtung zum Abtrennen von Wasserstoff aufweisen.

Das vorschlagsgemäße Verfahren ist dadurch gekennzeichnet, dass der Energieträgerstrom 3 vor Zuführung zur Synthesegasreaktoranordnung 4 einer Sättigungsstufe 11 zugeführt wird, in welcher Sättigungsstufe 11 dem Energieträgerstrom 3 vorgewärmtes Kondensat 12, welches in der Anlage 2 angefallen ist, zugeführt wird.

Weiter ist das vorschlagsgemäße Verfahren dadurch gekennzeichnet, dass ein Dampfanteil des Synthesegasstroms 5 bei Zuführung zu der Shiftvorrichtung 15a-c zu mindestens 80 % bereits in der Synthesegasreaktoranordnung 4, insbesondere in der Synthesegasreaktorstufe 18, vorhanden ist. Anders ausgedrückt ist das Wasser, welches als Dampf in der Shiftvorrichtung 15a-c vorhanden ist, zu mindestens 80 % so zugeführt worden, dass es bereits in der Synthesegasreaktoranordnung 4 vorhanden war und danach Teil des Synthesegasstroms 5 wurde. Vorzugsweise ist der Dampfanteil des Synthesegasstroms 5 bei Zuführung zu der Shiftvorrichtung 15a-c zu mindestens 85 % und insbesondere zu mindestens 90 % bereits in der Synthesegasreaktoranordnung 4 vorhanden. Hier ist es weiter bevorzugt, dass der Dampfanteil des Synthesegasstroms 5 bei Zuführung zu der Shiftvorrichtung 15a-c zu mindestens 80 %, vorzugsweise zu mindestens 85 % und insbesondere zu mindestens 90 % auf das in der Sättigungsstufe 11 zugeführte Kondensat zurückgeht. Durch die Zuführung in der Sättigungsstufe 11 liegt das zugeführte Wasser zu dem entsprechenden Anteil als Dampf in der Synthesegasreaktoranordnung 4 vor.

Bei dem Kondensat 12 handelt es sich um flüssiges Wasser, das durch Kondensation von gasförmigen Wasser in der Anlage 1 gewonnen wurde. Bei der Sättigungsstufe 11 handelt es sich um einen Vorrichtung, mit welcher flüssiges Wasser einem Gasstrom - hier speziell dem Energieträgerstrom 3 - zugeführt werden kann, sodass sich der Anteil an Dampf im dem jeweiligen Gasstrom, hier also dem Energieträgerstrom 3, erhöht. Der Vorteil gegenüber einer Zuführung von Hochdruckdampf liegt darin, dass dieser Hochdruckdampf nicht zusätzlich erzeugt werden muss. Im vorliegenden Ausführungsbeispiel wird das in den Wärmetauscherstufen 22a-c vorgewärmte Kondensat bei 260° Celsius auf einen Druck von 60 bar für die Zuführung zur Sättigungsstufe 11 gepumpt. Vorzugsweise umfasst die Anlage 2 die Sättigungsstufe 11.

Bevorzugt ist weiter, dass bei der autothermen Reformierung in der Synthesegasreaktoranordnung 4 und insbesondere in der Synthesegasreaktorstufe 18 ein molares Dampf-zu-Kohlenstoff-Verhältnis von mindestens 1,5, vorzugsweise von mindestens 1,6, weiter vorzugsweise ein molares Dampf-zu-Kohlenstoff-Verhältnis von mindestens 2 und insbesondere ein molares Dampf-zu-Kohlenstoff-Verhältnis von mindestens 2,4, besteht. Je höher das Dampf-zu-Kohlenstoff-Verhältnis ist, umso geringer ist der Methanslip und umso wirksamer kann Kohlenstoffmonoxid bei der Wassergas-Shift-Reaktion in Kohlenstoffdioxid umgewandelt werden.

Die nachstehende Tabelle gibt verschiedene Prozessparameter wieder, die sich bei unterschiedlichen molaren Dampf-zu-Kohlenstoff-Verhältnissen und einer bei 65 bar betriebenen autothermen Reformierung einstellen.

| | | | | | | |
|---|---|---|---|---|---|---|
| Dampf/C Verhältnis | 1,2 | 1,6 | 2,0 | 2,4 | 2,8 | 3,0 |
| CH₄ Slip % | 3,5% | 2,5% | 1,6% | 1,2% | 0,9% | 0,8% |
| Ausgang ATR trocken | | | | | | |
| CO₂ mol/mol | 0,083 | 0,095 | 0,107 | 0,118 | 0,129 | 0,134 |
| CO mol/mol | 0,230 | 0,218 | 0,206 | 0,195 | 0,183 | 0,179 |
| H₂ mol/mol | 0,651 | 0,661 | 0,668 | 0,673 | 0,677 | 0,680 |
| Spez. Energieverbrauch GJ/t NH₃ | 32,22 | 32,25 | 32,25 | 32,25 | 32,25 | 32,25 |
| Carbon Recovery Rate % | 80,4 | 85,7 | 89,2 | 91,4 | 93,0 | 93,5 |
| Verbleibende CO₂ Emission t CO₂/t NH₃ | 0,351 | 0,255 | 0,192 | 0,153 | 0,127 | 0,117 |

Erkennbar ist, dass sich mit höherem Dampf-zu-Kohlenstoff-Verhältnis der Methanslip verringert. Ebenso erhöht sich der Anteil von Kohlenstoffdioxid und von Wasserstoff gegenüber dem von Kohlenstoffmonoxid im Synthesegas. Zwar findet eine leichte Erhöhung des Energieverbrauchs statt. Dies wird aber dadurch mehr als kompensiert, dass sich der Prozentsatz des rekuperierten Kohlenstoffdioxids stark erhöht. Im Ergebnis können auf diese Weise die CO2-Emissionen um bis zu 2/3 verringert werden.

Grundsätzlich kann der Energieträgerstrom direkt der autothermen Reformierung zugeführt werden, sodass also das Gewinnen des Synthesegasstroms 5 aus einer autothermen Reformierung besteht. Das bedeutet, dass also keine Dampfreformierung beim Gewinnen des Synthesegasstroms 5 stattfindet. Eine bevorzugte Ausführungsform des vorschlagsgemäßen Verfahrens ist dadurch gekennzeichnet, dass die Synthesegasreaktoranordnung 4 einen Pre-Reformer 13, welcher vorzugsweise von der Anlage 2 umfasst ist, zum Aufspalten von Kohlenwasserstoffen mit mindestens zwei Kohlenstoffatomen in Methan aufweist. Der Pre-Reformer 13 ist insbesondere der Synthesegasreaktorstufe 18 prozesstechnische vorgeschaltet. Vorzugsweise erfolgt in dem Pre-Reformer 13 eine adiabatische Dampfreformierung über einem nickelbasierten Katalysator. Weiter ist bevorzugt, dass der Energieträgerstrom 3 vor Zuführung zur Sättigungsstufe 11 einer vorzugsweise von der Anlage 2 umfassten Entschwefelungsstufe 14 zur Entschwefelung des Energieträgerstroms 3 zugeführt wird. Ebenso ist es bevorzugt, dass das Gewinnen des Synthesegasstroms 5 aus der autothermen Reformierung und dem Pre-Reforming in dem Pre-Reformer 13 besteht. Dementsprechend findet dann keine herkömmliche Dampfreformierung bei dem Gewinnen des Synthesegasstroms 5 statt.

Eine weitere bevorzugte Ausführungsform des vorschlagsgemäßen Verfahrens ist dadurch gekennzeichnet, dass der Synthesegasstrom 5 vor Zuführung zur Trennanordnung 6 einer Vielzahl von Shiftvorrichtungen 15a, b zugeführt wird, welche vorzugsweise prozesstechnisch zueinander beabstandet angeordnet sind und insbesondere von der Anlage 2 umfasst sein können. Das bedeutet, dass prozesstechnisch zwischen zwei Shiftvorrichtungen 15a, b mindestens eine weitere Vorrichtung angeordnet ist, bei welcher es sich nicht um eine Shiftvorrichtung 15a, b handelt. Auf diese Weise ist es möglich, den Synthesegasstrom 5 von einer Shiftvorrichtung 15a, b zur nächsten auf eine jeweils andere angepasste Temperatur zu bringen. Bevorzugt ist weiter, dass der den Shiftvorrichtungen 15a, b zugeführte Synthesegasstrom 5 in den Shiftvorrichtungen 15a, b jeweils eine Wassergas-Shift-Reaktion zur Umsetzung zumindest eines Teils des Kohlenstoffmonoxids des Synthesegasstroms 5 mit Dampf des Synthesegasstroms 5 in Kohlenstoffdioxid und Wasserstoff stattfindet.

Gemäß einer bevorzugten Ausführungsform des vorschlagsgemäßen Verfahrens ist vorgesehen, dass in den Shiftvorrichtungen 15a, b die Wassergas-Shift-Reaktion jeweils in einem in Prozessrichtung abnehmenden Temperaturbereich stattfindet. Insbesondere kann es sein, dass die Shiftvorrichtungen 15a, b eine HT-Shiftvorrichtung 16 für eine Hochtemperatur-Wassergas-Shift-Reaktion und eine MT-Shiftvorrichtung 17 für eine Mitteltemperatur-Wassergas-Shift-Reaktion umfassen. Es kann alternativ oder zusätzlich auch sein, dass die Shiftvorrichtungen 15a, b eine NT-Shiftvorrichtung für eine Niedertemperatur-Wassergas-Shift-Reaktion umfassen. Dabei ist bevorzugt, dass prozesstechnisch die MT-Shiftvorrichtung 17 der HT-Shiftvorrichtung 16 folgt. Die NT-Shiftvorrichtung kann, falls vorgesehen, prozesstechnisch der MT-Shiftvorrichtung 17 folgen.

Die Hochtemperatur-Wassergas-Shift-Reaktion findet bei einer Temperatur zwischen 300° C und 450° C statt. Die Mitteltemperatur-Wassergas-Shift-Reaktion findet bei einer Temperatur zwischen 220° C und 270° C statt. Die Niedertemperatur-Wassergas-Shift-Reaktion findet bei einer Temperatur zwischen 180° C und 250° C statt. Die Hochtemperatur-Wassergas-Shift-Reaktion hat für die Umwandlung in CO2 zwar ein schlechteres Reaktionsgleichgewicht, aber eine bessere Reaktionsgeschwindigkeit. Das hohe molares Dampf-zu-Kohlenstoff-Verhältnis verbessert das Reaktionsgleichgewicht. Durch diese Kaskadierung der Shiftvorrichtungen kann zunächst ein rascher Abbau von Kohlenstoffmonoxid erreicht werden, wobei die nachfolgenden Stufen sukzessive die verbliebenen Reste an Kohlenstoffmonoxid umwandeln. Da die Konzentration des Kohlenstoffmonoxids bereits verringert wurde, kann auch eine längere Reaktionszeit in Kauf genommen werden.

Gemäß einer bevorzugten Ausführungsform des vorschlagsgemäßen Verfahrens ist vorgesehen, dass ein Dampfanteil des Synthesegasstroms 5 bei Zuführung zu einer prozesstechnisch ersten Shiftvorrichtung 15a der Shiftvorrichtungen 15a, b zu mindestens 90 % auf das in der Sättigungsstufe 11 zugeführte Kondensat zurückgeht. Auf diese Weise kann auf die Zufuhr von Dampf zum Erreichen des gewünschten Dampfanteils im Wesentlichen verzichtet werden. Zur genaueren Regelung des Dampf-zu-Kohlenstoff-Verhältnisses können Hochdruckdampfzufuhrvorrichtungen 19a-c entlang der Prozesstrecke vorgesehen sein. Diese können kleinere Mengen an Dampf zuführen.

Eine bevorzugte Ausführungsform des vorschlagsgemäßen Verfahrens ist dadurch gekennzeichnet, dass der Synthesegasstrom 5 vor Zuführung zur Trennanordnung 6, vorzugsweise den Shiftvorrichtungen 15a, b prozesstechnisch nachgelagert, einer Kondensationsstufe 20 zum Gewinnen von Prozesskondensat 21 zugeführt wird. Vorzugsweise ist die Kondensationsstufe 20 von der Anlage 2 umfasst. Vorzugsweise wird der Synthesegasstrom 5 den Shiftvorrichtungen 15a, b prozesstechnisch nachgelagert der Kondensationsstufe 20 zugeführt. Anders ausgedrückt ist die Kondensationsstufe 20 prozesstechnisch den Shiftvorrichtungen 15a, b nachgelagert angeordnet. Bevorzugt ist weiter, dass das in der Sättigungsstufe 11 zugeführte Kondensat 12 das in der Kondensationsstufe 20 gewonnene Prozesskondensat 21 umfasst oder dass sogar das in der Sättigungsstufe 11 zugeführte Kondensat 12 im Wesentlichen aus dem in der Kondensationsstufe 20 gewonnenen Prozesskondensat 21 besteht. Besonders vorteilhaft ist es, wenn in der Kondensationsstufe 20 soviel Prozesskondensat 21 gewonnen wird, dass der Dampfanteil des Synthesegasstroms 5 bei Zuführung zu der Shiftvorrichtung 15a-c zu mindestens 80 %, vorzugsweise zu mindestens 85 % und insbesondere zu mindestens 90 % auf das Prozesskondensat 21 zurückgeht. Im Falle des Vorhandenseins einer Vielzahl von Shiftvorrichtungen 15a-c bezieht sich dies vorzugsweise auf die prozesstechnisch erste Shiftvorrichtung 15a der Shiftvorrichtungen 15a-c. Durch einen so hohen Anteil wird erreicht, dass das Prozesskondensat 21 im Wesentlichen vollständig in einem Kreislauf gefahren wird.

Eine weitere bevorzugte Ausführungsform des vorschlagsgemäßen Verfahrens ist dadurch gekennzeichnet, dass der Synthesegasstrom 5 vor Zuführung zur Adsorptionsvorrichtung 6, vorzugsweise der Kondensationsstufe 20 vorgelagert, einer Vielzahl von Wärmetauscherstufen 22a-c zum Abkühlen des Synthesegasstroms zugeführt wird. Bevorzugt sind die Wärmetauscherstufen 22a-c von der Anlage 2 umfasst. Auf diese Weise kann der Synthesegasstrom 5 zum Erhöhen der Ausbeute an Prozesskondensat 21 abgekühlt werden. Vorzugsweise sind die Wärmetauscherstufen 22a-c zueinander prozesstechnisch beabstandet angeordnet. Insbesondere können die Wärmetauscherstufen 22a-c zumindest teilweise prozesstechnisch zwischen den Shiftvorrichtungen 15a-c angeordnet sein. Als besonders vorteilhaft hat sich die Variante erweisen, bei der eine prozesstechnisch erste Wärmetauscherstufe 22a prozesstechnisch der Synthesegasreaktoranordnung 4 nachgelagert und den Shiftvorrichtungen 15a, b vorgelagert angeordnet ist. Mit der prozesstechnisch ersten Wärmetauscherstufe 22a ist diejenige Wärmetauscherstufe gemeint, auf die der Synthesegasstrom 5 aus der Synthesegasreaktoranordnung 4 kommend prozesstechnisch als erstes trifft.

Auf diese Weise kann die Temperatur des Synthesegasstroms 5 noch vor Erreichen der ersten Shiftvorrichtung 15a verringert und insbesondere exakt auf den optimalen Temperaturwert eingestellt werden. Grundsätzlich soll ja nach Abschluss der Wassergas-Shift-Reaktionen die Temperatur des Synthesegasstroms 5 für eine möglichst weit reichende Kondensation herabgesunken sein.

Gemäß einer bevorzugten Ausführungsform des vorschlagsgemäßen Verfahrens ist vorgesehen, dass zumindest einem Teil der Wärmetauscherstufen 22a-c und vorzugsweise allen Wärmetauscherstufen 22a-c das Prozesskondensat 21 als Kühlmittel zugeführt wird. Insbesondere kann dadurch das Prozesskondensat 21 durch zumindest einen Teil und vorzugsweise durch alle Wärmetauscherstufen 22a-c vorgewärmt werden. Auf diese Weise kann im Ergebnis auch das in der Sättigungsstufe 11 zugeführte Kondensat 12 vorgewärmt werden. Bevorzugt ist weiter dass das Prozesskondensat 21 nacheinander den Wärmetauscherstufen 22a-c und anschließend der Sättigungsstufe 11 zugeführt wird. Dabei sind die Wärmetauscherstufen 22a-c vorzugsweise so eingerichtet, dass in der prozesstechnisch ersten Wärmetauscherstufe 22a keine Kondensation von Wasser aus dem Synthesegasstrom 5 erfolgt, die erste Wärmetauscherstufe 22a also kondensationsfrei bleibt.

Grundsätzlich kann die Trennanordnung 6 mit einem beliebigen Wirkungsgrad der Trennung betrieben werden. Eine bevorzugte Ausführungsform des vorschlagsgemäßen Verfahrens ist dadurch gekennzeichnet, dass die Trennanordnung 6 einen Wirkungsgrad der Trennung von höchstens 90 % hat, sodass höchstens ein molarer Anteil von 90 % des Wasserstoffs aus dem Synthesegasstrom 5 von dem Wasserstoffstrom 7 umfasst ist. Dementsprechend können bis zu 10 % des molaren Anteils von Wasserstoff in dem Synthesegasstrom 5 von dem Abgasstrom 8 umfasst sein. Auf diese Weise erhöht sich der Stoffanteil in dem Abgasstrom 8, der zur Verfeuerung ohne CO2-Emission eingesetzt werden kann. Dies wird untenstehend noch beschrieben. Vorzugsweise hat die Trennanordnung 6 einen Wirkungsgrad der Trennung von höchstens 85 % oder sogar höchstens von 80 %, sodass höchstens ein molarer Anteil von 85 % des Wasserstoffs bzw. höchstens ein molarer Anteil von 80 % des Wasserstoffs aus dem Synthesegasstrom 5 von dem Wasserstoffstrom 7 umfasst ist. Damit steht im Abgasstrom 8 noch mehr Wasserstoff für die Verfeuerung zur Verfügung. Der Wirkungsgrad kann so eingestellt werden, dass im Abgasstrom 8 soviel Wasserstoff zur Verfügung gestellt werden kann, dass kein zusätzliches Erdgas verfeuert werden muss.

Eine bevorzugte Ausführungsform des vorschlagsgemäßen Verfahrens ist dadurch gekennzeichnet, dass die Trennanordnung 6 mit einem im Wesentlichen maximalen Wirkungsgrad der Trennung betrieben wird und dass ein frisch gewonnener Wasserstoffverfeuerungsstrom zur Unterfeuerung eines oder mehrerer gasgefeuerte Einsatzstofferhitzer 26a-d verwendet wird. Bei einem hohen Wirkungsgrad der Trennanordnung 6 wird regelmäßig nicht genügend Wasserstoff im Abgasstrom 8 zum Erreichen der erforderlichen Brennleistung vorhanden sein. Ergänzend kann Wasserstoff aus dem Wasserstoffstrom 7 abgezweigt werden.

Grundsätzlich kann die Synthesegasreaktoranordnung 4 auch mit Umgebungsluft betrieben werden. Eine weitere bevorzugte Ausführungsform des vorschlagsgemäßen Verfahrens ist jedoch dadurch gekennzeichnet, dass ein Sauerstoffstrom 23 aus einer Sauerstoffgewinnungsanordnung 24 der Synthesegasreaktoranordnung 4 zum Gewinnen des Synthesegasstroms 5 zugeführt wird. Der Sauerstoffgewinnungsanordnung 24 wird Umgebungsluft 32 zugeführt. Auf diese Weise resultiert ein niedrigerer Stickstoffanteil in dem Synthesegasstrom 5. Speziell gewinnt die Synthesegasreaktoranordnung 4 aus dem Energieträgerstrom 3 den Synthesegasstrom 5 durch eine autotherme Reformierung mit dem Sauerstoffstrom 23.

Gemäß einer bevorzugten Ausführungsform des vorschlagsgemäßen Verfahrens ist vorgesehen, dass zumindest ein Teil der Kohlenstoffoxide aus dem Abgasstrom 8 durch einen Rückgewinnungsstrom 33 der Synthesegasreaktoranordnung 4 zugeführt wird. Damit wird erreicht, dass diese Kohlenstoffoxide jedenfalls zunächst nicht direkt oder im Falle des Kohlenstoffmonoxids nach Verbrennung in die Atmosphäre gelangen, sondern die vorherigen Prozessschritte wieder durchlaufen. Der Kohlenstoff in dem Rückgewinnungsstrom 33 kann dann, ggf. nach Umwandlung in Kohlenstoffdioxid, in der untenstehend näher beschriebenen Kohlenstoffdioxidwäsche ausgewaschen werden. Der Rückgewinnungsstrom 33 kann auf unterschiedliche Art und Weise aus dem Abgasstrom 8 gewonnen werden. Gemäß einer ersten Variante wird der Rückgewinnungsstrom 33 einfach aus dem Abgasstrom 8 abgezweigt, sodass der Rückgewinnungsstrom 33 im Wesentlichen die gleiche Zusammensetzung wie der Abgasstrom 8 aufweist.

Die Zuführung des Rückgewinnungsstroms 33 kann insbesondere dadurch erfolgen, dass der Rückgewinnungsstrom 33 dem Energieträgerstrom 3 zugeführt wird. Insbesondere kann es sein, dass der Rückgewinnungsstrom 33 dem Energieträgerstrom 3 einem Erdgaskompressor 28 zur Druckerhöhung des Energieträgerstroms 3 prozesstechnisch vorgelagert zugeführt wird. Jedoch ist es auch denkbar, dass der Rückgewinnungsstrom 33 dem Energieträgerstrom 3 dem Erdgaskompressor 28 prozesstechnisch nachgelagert zugeführt wird. Vorzugsweise umfasst die Anlage 2 den Erdgaskompressor 28.

Gemäß einer weiteren bevorzugten Ausführungsform des vorschlagsgemäßen Verfahrens ist vorgesehen, dass die Trennanordnung 6 aus dem Synthesegasstrom 5 auch einen, vorzugsweise wasserstoffhaltigen, Purgestrom 25 gewinnt, welcher insbesondere zur Unterfeuerung eines oder mehrerer gasgefeuerter Einsatzstofferhitzer 26a-d verwendet wird. Ein solcher gasgefeuerter Einsatzstofferhitzer 26a-d kann synonym auch als "fired heater" bezeichnet werden. Auch der Purgestrom 25 kann auf unterschiedliche Art und Weise gewonnen werden. Insbesondere kann der Purgestrom 25 aus dem Abgasstrom 8 gewonnen werden. Im vorliegenden Ausführungsbeispiel und bevorzugt werden der Rückgewinnungsstrom 33 und der Purgestrom 25 durch Aufteilen des Abgasstroms 8 gewonnen. Vorzugsweise umfasst die Anlage 2 den oder die mehreren gasgefeuerten Einsatzstofferhitzer 26a-d.

Ebenso ist es möglich, dass der Abgasstrom 8 einer Druckwechsel-Adsorptionsvorrichtung oder einer Membranvorrichtung zugeführt wird. Aus der jeweiligen Vorrichtung kann dann als Strom mit einem höheren molaren Wasserstoffanteil der Purgestrom 25 und als Strom mit einem niedrigeren molaren Wasserstoffanteil der Rückgewinnungsstrom 33 gewonnen wird. Entsprechend weist der Purgestrom 25 bevorzugt einen niedrigeren molaren Anteil an Kohlenstoffmonoxid als der Rückgewinnungsstrom 33 auf.

Eine bevorzugte Ausführungsform des vorschlagsgemäßen Verfahrens ist dadurch gekennzeichnet, dass der Wirkungsgrad der Trennanordnung 6 so eingestellt ist, dass durch den Wasserstoffgehalt des Purgestroms 25 ein dem gasgefeuerten Einsatzstofferhitzer 26a-d zugeführte Speisestrom 27a-d im Wesentlichen erdgasfrei ist. Der Speisestrom 27a-d stellt den Gasstrom dar, welcher in dem jeweiligen gasgefeuerten Einsatzstofferhitzer 26a-d verfeuert wird. Insbesondere kann der Speisestrom 27a-d den Purgestrom 25 ganz oder teilweise umfassen. Der Speisestrom 27a-d kann auch aus dem Purgestrom 25 oder aus einem Teil des Purgestroms 25 bestehen. Mit einem ausreichend hohen Wasserstoffgehalt in dem Purgestrom 25 kann durch das Verbrennen des Wasserstoffs ausreichend Hitze erzeugt werden, sodass die Verbrennung von Erdgas zum Erreichen der gewünschten Temperatur entbehrlich ist.

Die Anlage 2 kann auch eine Vielzahl von gasgefeuerten Einsatzstofferhitzern 26a -d aufweisen. Im vorliegenden Ausführungsbeispiel dient ein erster gasgefeuerter Einsatzstofferhitzer 26a dem Erhitzen des Energieträgerstroms 3, wobei der erste gasgefeuerte Einsatzstofferhitzer 26a dem Erdgaskompressor 28 prozesstechnisch nachgelagert angeordnet ist. Der zweite gasgefeuerte Einsatzstofferhitzter 26b dient ebenfalls dem Erhitzen des Energieträgerstroms 3, ist aber prozesstechnisch zwischen der Sättigungsstufe 11 und dem Pre-Reformer 13 angeordnet. Auch der dritte gasgefeuerte Einsatzstofferhitzer 26c dient dem Erhitzen des Energieträgerstroms 3 und ist prozesstechnisch zwischen dem Pre-Reformer 13 und der Synthesegasreaktorstufe 18 angeordnet. Der vierte gasgefeuerte Einsatzstofferhitzer 26d schließlich dient dem Erhitzen eines Dampfstroms 29, welcher aus der Ammoniak-Reaktoranordnung 10 gewonnen wird.

Eine weitere bevorzugte Ausführungsform des vorschlagsgemäßen Verfahrens ist dementsprechend dadurch gekennzeichnet, dass der Purgestrom 25 zur Unterfeuerung einer Vielzahl von gasgefeuerten Einsatzstofferhitzern 26a-d der Anlage 2 und insbesondere zur Unterfeuerung aller gasgefeuerten Einsatzstofferhitzer 26a-d der Anlage 2 verwendet wird. Zu diesem Zweck kann es sein, dass der jeweilige Speisestrom 27 a-d aus einer Unterteilung des Purgestroms 25 in eine Vielzahl von Speiseströmen 27a-d gewonnen wird. Auf diese Weise wird die bevorzugte Variante ermöglicht, nach der dass durch den Wasserstoffgehalt des Purgestroms 25 der allen gasgefeuerten Einsatzstofferhitzer 26a-d der Anlage zugeführte jeweilige Speisestrom 27a-d im Wesentlichen erdgasfrei ist. Es liegt auf der Hand, dass das die CO2-Abgabe der Anlage 2 wesentlich verringert.

Gemäß einer bevorzugten Ausführungsform des vorschlagsgemäßen Verfahrens ist vorgesehen, dass der Synthesegasstrom 5 prozesstechnisch der Shiftvorrichtung 15a-c nachgelagert einer Kohlenstoffdioxidwäsche 30 zum Auswaschen mindestens eines Teiles des Kohlenstoffdioxids aus dem Synthesegasstrom 5 zugeführt wird. Das als Kohlenstoffdioxidstrom 34 ausgewaschene Kohlenstoffdioxid kann dann sequestriert oder anderweitig verwendet werden und wird jedenfalls nicht zwangsläufig in die Atmosphäre emittiert. Insbesondere ist vorgesehen, dass in der Kohlenstoffdioxidwäsche 30 das Kohlenstoffdioxid durch ein Methanol umfassendes Waschmedium ausgewaschen wird.

Die vorschlagsgemäße Anlage dient zur Herstellung von Ammoniak 1 und weist eine Synthesegasreaktoranordnung 4 zum Gewinnen eines Synthesegasstroms 5 mit Wasserstoff und Kohlenstoffoxiden aus einem kohlenstoffhaltigen Energieträgerstrom 3 durch eine autotherme Reformierung auf. Eine eine vorzugsweise katalytische partielle Oxidation stellt die für die endothermen Reformierungsreaktionen erforderliche Wärme bereit.

Die vorschlagsgemäße Anlage weist ferner eine Shiftvorrichtung 15a-c auf, welcher der Synthesegasstrom 5 zugeführt wird, wobei in der Shiftvorrichtung 15a-c eine Wassergas-Shift-Reaktion zur Umsetzung zumindest eines Teils des Kohlenstoffmonoxids des Synthesegasstroms 5 mit Dampf des Synthesegasstroms 5 in Kohlenstoffdioxid und Wasserstoff stattfindet.

Die vorschlagsgemäße Anlage weist weiter eine prozesstechnisch der Shiftvorrichtung 15a-c nachgelagert angeordnete Trennanordnung 6 zum Trennen zumindest eines Teils des Synthesegasstroms 5 in einen Wasserstoffstrom 7 mit Wasserstoff und in einen Kohlenstoffoxide aufweisenden Abgasstrom 8 sowie eine Ammoniak-Reaktoranordnung 10 zum Umwandeln zumindest eines Teils eines Wasserstoffstroms 7 und eines Stickstoffstroms 9 in Ammoniak 1.

Die vorschlagsgemäße Anlage ist dadurch gekennzeichnet, dass die Anlage 2 eine prozesstechnisch der Synthesegasreaktoranordnung 4 vorgelagerte Sättigungsstufe 11 zur Zufuhr von in der Anlage 2 angefallenem Kondensat 12 an den Energieträgerstrom 3 aufweist.

Die vorschlagsgemäße Anlage ist weiter dadurch gekennzeichnet, dass ein Dampfanteil des Synthesegasstroms 5 bei Zuführung zu der Shiftvorrichtung 15a-c zu mindestens 80 % bereits in der Synthesegasreaktoranordnung 4 vorhanden ist.

Vorstehend beschriebene bevorzugte Ausgestaltungen, Merkmale und Eigenschaften des vorschlagsgemäßen Verfahrens entsprechen bevorzugten Ausgestaltungen, Merkmalen und Eigenschaften der vorschlagsgemäßen Anlage und umgekehrt.

## Patentansprüche

1. Verfahren zur Herstellung von Ammoniak (1) in einer Anlage (2) zur Herstellung von Ammoniak (1), wobei ein kohlenstoffhaltiger Energieträgerstrom (3) einer Synthesegasreaktoranordnung (4) zum Gewinnen eines Synthesegasstroms (5) mit Wasserstoff und Kohlenstoffoxiden zugeführt wird, wobei die Synthesegasreaktoranordnung (4) aus dem Energieträgerstrom (3) den Synthesegasstrom (5) durch eine autotherme Reformierung gewinnt, wobei der Synthesegasstrom (5) einer Shiftvorrichtung (15a-c) zugeführt wird, wobei in der Shiftvorrichtung (15a-c) eine Wassergas-Shift-Reaktion zur Umsetzung zumindest eines Teils des Kohlenstoffmonoxids des Synthesegasstroms (5) mit Dampf des Synthesegasstroms (5) in Kohlenstoffdioxid und Wasserstoff stattfindet, wobei der Synthesegasstrom (5) der Shiftvorrichtung (15a-c) prozesstechnisch nachgelagert zumindest teilweise einer Trennanordnung (6) zum Trennen des Synthesegasstroms (5) zumindest in einen Wasserstoffstrom (7) mit Wasserstoff und in einen Kohlenstoffoxide aufweisenden Abgasstrom (8) zugeführt wird, wobei ein Wasserstoffstrom (7) zumindest teilweise sowie ein Stickstoffstrom (9) einer Ammoniak-Reaktoranordnung (10) zugeführt und dort in Ammoniak (1) umgewandelt wird, **dadurch gekennzeichnet, dass** der Energieträgerstrom (3) vor Zuführung zur Synthesegasreaktoranordnung (4) einer Sättigungsstufe (11) zugeführt wird, in welcher Sättigungsstufe (11) dem Energieträgerstrom (3) vorgewärmtes Kondensat (12), welches in der Anlage (2) angefallen ist, zugeführt wird und dass ein Dampfanteil des Synthesegasstroms (5) bei Zuführung zu der Shiftvorrichtung (15a-c) zu mindestens 80 % bereits in der Synthesegasreaktoranordnung (4) vorhanden ist..

2. Verfahren nach Anspruch 1, **dadurch gekennzeichnet, dass** die Synthesegasreaktoranordnung (4) einen Pre-Reformer (13) zum Aufspalten von Kohlenwasserstoffen mit mindestens zwei Kohlenstoffatomen in Methan aufweist, vorzugsweise, dass der Energieträgerstrom (3) vor Zuführung zur Sättigungsstufe (11) einer Entschwefelungsstufe (13) zur Entschwefelung des Energieträgerstroms (3) zugeführt wird.

3. Verfahren nach Anspruch 1 oder Anspruch 2, **dadurch gekennzeichnet, dass** der Synthesegasstrom (5) vor Zuführung zur Trennanordnung (6) einer Vielzahl von, vorzugsweise prozesstechnisch beabstandet angeordneten, Shiftvorrichtungen (15a-c) zugeführt wird, und dass in den Shiftvorrichtungen (15a-c) jeweils eine Wassergas-Shift-Reaktion zur Umsetzung zumindest eines Teils des Kohlenstoffmonoxids des Synthesegasstroms (5) mit Dampf des Synthesegasstroms (5) in Kohlenstoffdioxid und Wasserstoff stattfindet.

4. Verfahren nach Anspruch 3, **dadurch gekennzeichnet, dass** in den Shiftvorrichtungen (15a-c) die Wassergas-Shift-Reaktion jeweils in einem in Prozessrichtung abnehmenden Temperaturbereich stattfindet, vorzugsweise, dass die Shiftvorrichtungen (15a-c) eine HT-Shiftvorrichtung (16) für eine Hochtemperatur-Wassergas-Shift-Reaktion und eine MT-Shiftvorrichtung (17) für eine Mitteltemperatur-Wassergas-Shift-Reaktion umfassen.

5. Verfahren nach Anspruch 3 oder 4, **dadurch gekennzeichnet, dass** ein Dampfanteil des Synthesegasstroms (5) bei Zuführung zu einer prozesstechnisch ersten Shiftvorrichtung (15a) der Shiftvorrichtungen (15a-c) zu mindestens 80 %, vorzugsweise mindestens 85 %, insbesondere mindestens 90 %, auf das in der Sättigungsstufe (11) zugeführte Kondensat zurückgeht.

6. Verfahren nach einem der Ansprüche 1 bis 5, **dadurch gekennzeichnet, dass** der Synthesegasstrom (5) vor Zuführung zur Trennanordnung (6), vorzugsweise den Shiftvorrichtungen (15a-c) prozesstechnisch nachgelagert, einer Kondensationsstufe (20) zum Gewinnen von Prozesskondensat (21) zugeführt wird, vorzugsweise, dass das in der Sättigungsstufe (11) zugeführte Kondensat (12) das in der Kondensationsstufe (20) gewonnene Prozesskondensat (21) umfasst, insbesondere, dass das in der Sättigungsstufe (11) zugeführte Kondensat (12) im Wesentlichen aus dem in der Kondensationsstufe (20) gewonnenen Prozesskondensat (21) besteht.

7. Verfahren nach einem der Ansprüche 1 bis 6, **dadurch gekennzeichnet, dass** der Synthesegasstrom (5) vor Zuführung zur Adsorptionsvorrichtung (6), vorzugsweise der Kondensationsstufe (20) vorgelagert, einer Vielzahl von Wärmetauscherstufen (22a-c) zum Abkühlen des Synthesegasstroms (5) zugeführt wird, vorzugsweise, dass die Wärmetauscherstufen (22a-c) zumindest teilweise prozesstechnisch zwischen den Shiftvorrichtungen (15a-c) angeordnet sind, insbesondere, dass eine prozesstechnisch erste Wärmetauscherstufe (22a) prozesstechnisch der Synthesegasreaktoranordnung (4) nachgelagert und den Shiftvorrichtungen (15a-c) vorgelagert angeordnet ist.

8. Verfahren nach einem der Ansprüche 1 bis 7, **dadurch gekennzeichnet, dass** bei der autothermen Reformierung in der Synthesegasreaktoranordnung (4) ein molares Dampf-zu-Kohlenstoff-Verhältnis von mindestens 1,6, vorzugsweise ein molares Dampf-zu-Kohlenstoff-Verhältnis von mindestens 2, insbesondere ein molares Dampf-zu-Kohlenstoff-Verhältnis von mindestens 2,4, besteht.

9. Verfahren nach einem der Ansprüche 1 bis 8, **dadurch gekennzeichnet, dass** die Trennanordnung (6) einen Wirkungsgrad der Trennung von höchstens 90 % hat, vorzugsweise von höchstens 85 % hat, sodass höchstens ein molarer Anteil von 10 % des Wasserstoffs, insbesondere höchstens ein molarer Anteil von 15 % des Wasserstoffs, aus dem Synthesegasstrom (5) von dem Wasserstoffstrom (7) umfasst ist.

10. Verfahren nach einem der Ansprüche 1 bis 8, **dadurch gekennzeichnet, dass** die Trennanordnung (6) mit einem im Wesentlichen maximalen Wirkungsgrad der Trennung betrieben wird und dass ein frisch gewonnener Wasserstoffverfeuerungsstrom zur Unterfeuerung eines oder mehrerer gasgefeuerter Einsatzstofferhitzer (26a-d) verwendet wird.

11. Verfahren einem der Ansprüche 1 bis 10, **dadurch gekennzeichnet, dass** ein Sauerstoffstrom (23) aus einer Sauerstoffgewinnungsanordnung (24) der Synthesegasreaktoranordnung (4) zum Gewinnen des Synthesegasstroms (5) zugeführt wird, vorzugsweise, dass die Synthesegasreaktoranordnung (4) aus dem Energieträgerstrom (3) den Synthesegasstrom (5) durch eine autotherme Reformierung mit dem Sauerstoffstrom (23) gewinnt.

12. Verfahren nach einem der Ansprüche 1 bis 11, **dadurch gekennzeichnet, dass** zumindest ein Teil der Kohlenstoffoxide aus dem Abgasstrom (8) durch einen Rückgewinnungsstrom (33) der Synthesegasreaktoranordnung (4) zugeführt wird.

13. Verfahren nach einem der Ansprüche 1 bis 12, **dadurch gekennzeichnet, dass** die Trennanordnung (6) aus dem Synthesegasstrom (5) auch einen, vorzugsweise wasserstoffhaltigen, Purgestrom (25) gewinnt, welcher insbesondere zur Unterfeuerung eines gasgefeuerten Einsatzstofferhitzers (26a-d) verwendet wird.

14. Verfahren nach Anspruch 13, **dadurch gekennzeichnet, dass** der Wirkungsgrad der Trennanordnung (6) so eingestellt ist, dass durch den Wasserstoffgehalt des Purgestroms (25) ein dem gasgefeuerten Einsatzstofferhitzer (26a-d) zugeführte Speisestrom (27) im Wesentlichen erdgasfrei ist.

15. Verfahren nach einem der Ansprüche 1 bis 14, **dadurch gekennzeichnet, dass** der Synthesegasstrom (5) prozesstechnisch der Shiftvorrichtung 15a-c nachgelagert einer Kohlenstoffdioxidwäsche (30) zum Auswaschen mindestens eines Teiles des Kohlenstoffdioxids aus dem Synthesegasstrom (5) zugeführt wird, insbesondere, dass in der Kohlenstoffdioxidwäsche (30) das Kohlenstoffdioxid durch ein Methanol umfassendes Waschmedium ausgewaschen wird.

16. Anlage zur Herstellung von Ammoniak (1) mit einer Synthesegasreaktoranordnung (4) zum Gewinnen eines Synthesegasstroms (5) mit Wasserstoff und Kohlenstoffoxiden aus einem kohlenstoffhaltigen Energieträgerstrom (3) durch eine autotherme Reformierung, mit einer Shiftvorrichtung (15a-c), der der Synthesegasstrom (5) zugeführt wird, wobei in der Shiftvorrichtung (15a-c) eine Wassergas-Shift-Reaktion zur Umsetzung zumindest eines Teils des Kohlenstoffmonoxids des Synthesegasstroms (5) mit Dampf des Synthesegasstroms (5) in Kohlenstoffdioxid und Wasserstoff stattfindet, einer prozesstechnisch der Shiftvorrichtung (15a-c) nachgelagert angeordneten Trennanordnung (6) zum Trennen zumindest eines Teils des Synthesegasstroms (5) in einen Wasserstoffstrom (7) mit Wasserstoff und in einen Kohlenstoffoxide aufweisenden Abgasstrom (8) und mit einer Ammoniak-Reaktoranordnung (10) zum Umwandeln zumindest eines Teils eines Wasserstoffstroms (7) und eines Stickstoffstroms (9) in Ammoniak (1), **dadurch gekennzeichnet, dass** die Anlage (2) eine prozesstechnisch der Synthesegasreaktoranordnung (4) vorgelagerte Sättigungsstufe (11) zur Zufuhr von in der Anlage (2) angefallenem vorgewärmten Kondensat (12) an den Energieträgerstrom (3) aufweist und dass ein Dampfanteil des Synthesegasstroms (5) bei Zuführung zu der Shiftvorrichtung (15a-c) zu mindestens 80 % bereits in der Synthesegasreaktoranordnung (4) vorhanden ist.

## Geänderte Patentansprüche

### Geänderte Patentansprüche gemäss Regel 137(2) EPÜ.

1. Verfahren zur Herstellung von Ammoniak (1) in einer Anlage (2) zur Herstellung von Ammoniak (1), wobei ein kohlenstoffhaltiger Energieträgerstrom (3) einer Synthesegasreaktoranordnung (4) zum Gewinnen eines Synthesegasstroms (5) mit Wasserstoff und Kohlenstoffoxiden zugeführt wird, wobei die Synthesegasreaktoranordnung (4) aus dem Energieträgerstrom (3) den Synthesegasstrom (5) durch eine autotherme Reformierung gewinnt, wobei der Synthesegasstrom (5) einer Shiftvorrichtung (15a-c) zugeführt wird, wobei in der Shiftvorrichtung (15a-c) eine Wassergas-Shift-Reaktion zur Umsetzung zumindest eines Teils des Kohlenstoffmonoxids des Synthesegasstroms (5) mit Dampf des Synthesegasstroms (5) in Kohlenstoffdioxid und Wasserstoff stattfindet, wobei der Synthesegasstrom (5) der Shiftvorrichtung (15a-c) prozesstechnisch nachgelagert zumindest teilweise einer Trennanordnung (6) zum Trennen des Synthesegasstroms (5) zumindest in einen Wasserstoffstrom (7) mit Wasserstoff und in einen Kohlenstoffoxide aufweisenden Abgasstrom (8) zugeführt wird, wobei ein Wasserstoffstrom (7) zumindest teilweise sowie ein Stickstoffstrom (9) einer Ammoniak-Reaktoranordnung (10) zugeführt und dort in Ammoniak (1) umgewandelt wird, wobei der Energieträgerstrom (3) vor Zuführung zur Synthesegasreaktoranordnung (4) einer Sättigungsstufe (11) zugeführt wird, in welcher Sättigungsstufe (11) dem Energieträgerstrom (3) vorgewärmtes Kondensat (12), welches in der Anlage (2) angefallen ist, zugeführt wird und wobei der Dampfanteil des Synthesegasstroms (5) bei Zuführung zu der Shiftvorrichtung (15a-c) zu mindestens 80 % bereits in der Synthesegasreaktoranordnung (4) vorhanden ist, **dadurch gekennzeichnet, dass** der Dampfanteil des Synthesegasstroms (5) bei Zuführung zu der Shiftvorrichtung (15a-c) zu mindestens 80 % auf das in der Sättigungsstufe (11) zugeführte Kondensat zurückgeht.

2. Verfahren nach Anspruch 1, **dadurch gekennzeichnet, dass** die Synthesegasreaktoranordnung (4) einen Pre-Reformer (13) zum Aufspalten von Kohlenwasserstoffen mit mindestens zwei Kohlenstoffatomen in Methan aufweist, vorzugsweise, dass der Energieträgerstrom (3) vor Zuführung zur Sättigungsstufe (11) einer Entschwefelungsstufe (13) zur Entschwefelung des Energieträgerstroms (3) zugeführt wird,

3. Verfahren nach Anspruch 1 oder Anspruch 2, **dadurch gekennzeichnet, dass** der Synthesegasstrom (5) vor Zuführung zur Trennanordnung (6) einer Vielzahl von, vorzugsweise prozesstechnisch beabstandet angeordneten, Shiftvorrichtungen (15a-c) zugeführt wird, und dass in den Shiftvorrichtungen (15a-c) jeweils eine Wassergas-Shift-Reaktion zur Umsetzung zumindest eines Teils des Kohlenstoffmonoxids des Synthesegasstroms (5) mit Dampf des Synthesegasstroms (5) in Kohlenstoffdioxid und Wasserstoff stattfindet.

4. Verfahren nach Anspruch 3, **dadurch gekennzeichnet, dass** in den Shiftvorrichtungen (15a-c) die Wassergas-Shift-Reaktion jeweils in einem in Prozessrichtung abnehmenden Temperaturbereich stattfindet, vorzugsweise, dass die Shiftvorrichtungen (15a-c) eine HT-Shiftvorrichtung (16) für eine Hochtemperatur-Wassergas-Shift-Reaktion und eine MT-Shiftvorrichtung (17) für eine Mitteltemperatur-Wassergas-Shift-Reaktion umfassen.

5. Verfahren nach Anspruch 3 oder 4, **dadurch gekennzeichnet, dass** ein Dampfanteil des Synthesegasstroms (5) bei Zuführung zu einer prozesstechnisch ersten Shiftvorrichtung (15a) der Shiftvorrichtungen (15a-c) zu mindestens 80 %, vorzugsweise mindestens 85 %, insbesondere mindestens 90 %, auf das in der Sättigungsstufe (11) zugeführte Kondensat zurückgeht.

6. Verfahren nach einem der Ansprüche 1 bis 5, **dadurch gekennzeichnet, dass** der Synthesegasstrom (5) vor Zuführung zur Trennanordnung (6), vorzugsweise den Shiftvorrichtungen (15a-c) prozesstechnisch nachgelagert, einer Kondensationsstufe (20) zum Gewinnen von Prozesskondensat (21) zugeführt wird, vorzugsweise, dass das in der Sättigungsstufe (11) zugeführte Kondensat (12) das in der Kondensationsstufe (20) gewonnene Prozesskondensat (21) umfasst, insbesondere, dass das in der Sättigungsstufe (11) zugeführte Kondensat (12) im Wesentlichen aus dem in der Kondensationsstufe (20) gewonnenen Prozesskondensat (21) besteht.

7. Verfahren nach einem der Ansprüche 1 bis 6, **dadurch gekennzeichnet, dass** der Synthesegasstrom (5) vor Zuführung zur Adsorptionsvorrichtung (6), vorzugsweise der Kondensationsstufe (20) vorgelagert, einer Vielzahl von Wärmetauscherstufen (22a-c) zum Abkühlen des Synthesegasstroms (5) zugeführt wird, vorzugsweise, dass die Wärmetauscherstufen (22a-c) zumindest teilweise prozesstechnisch zwischen den Shiftvorrichtungen (15a-c) angeordnet sind, insbesondere, dass eine prozesstechnisch erste Wärmetauscherstufe (22a) prozesstechnisch der Synthesegasreaktoranordnung (4) nachgelagert und den Shiftvorrichtungen (15a-c) vorgelagert angeordnet ist.

8. Verfahren nach einem der Ansprüche 1 bis 7, **dadurch gekennzeichnet, dass** bei der autothermen Reformierung in der Synthesegasreaktoranordnung (4) ein molares Dampf-zu-Kohlenstoff-Verhältnis von mindestens 1,6, vorzugsweise ein molares Dampf-zu-Kohlenstoff-Verhältnis von mindestens 2, insbesondere ein molares Dampf-zu-Kohlenstoff-Verhältnis von mindestens 2,4, besteht.

9. Verfahren nach einem der Ansprüche 1 bis 8, **dadurch gekennzeichnet, dass** die Trennanordnung (6) einen Wirkungsgrad der Trennung von höchstens 90 % hat, vorzugsweise von höchstens 85 % hat, sodass höchstens ein molarer Anteil von 10 % des Wasserstoffs, insbesondere höchstens ein molarer Anteil von 15 % des Wasserstoffs, aus dem Synthesegasstrom (5) von dem Wasserstoffstrom (7) umfasst ist.

10. Verfahren nach einem der Ansprüche 1 bis 8, **dadurch gekennzeichnet, dass** die Trennanordnung (6) mit einem im Wesentlichen maximalen Wirkungsgrad der Trennung betrieben wird und dass ein frisch gewonnener Wasserstoffverfeuerungsstrom zur Unterfeuerung eines oder mehrerer gasgefeuerter Einsatzstofferhitzer (26a-d) verwendet wird.

11. Verfahren einem der Ansprüche 1 bis 10, **dadurch gekennzeichnet, dass** ein Sauerstoffstrom (23) aus einer Sauerstoffgewinnungsanordnung (24) der Synthesegasreaktoranordnung (4) zum Gewinnen des Synthesegasstroms (5) zugeführt wird, vorzugsweise, dass die Synthesegasreaktoranordnung (4) aus dem Energieträgerstrom (3) den Synthesegasstrom (5) durch eine autotherme Reformierung mit dem Sauerstoffstrom (23) gewinnt.

12. Verfahren nach einem der Ansprüche 1 bis 11, **dadurch gekennzeichnet, dass** zumindest ein Teil der Kohlenstoffoxide aus dem Abgasstrom (8) durch einen Rückgewinnungsstrom (33) der Synthesegasreaktoranordnung (4) zugeführt wird.

13. Verfahren nach einem der Ansprüche 1 bis 12, **dadurch gekennzeichnet, dass** die Trennanordnung (6) aus dem Synthesegasstrom (5) auch einen, vorzugsweise wasserstoffhaltigen, Purgestrom (25) gewinnt, welcher insbesondere zur Unterfeuerung eines gasgefeuerten Einsatzstofferhitzers (26a-d) verwendet wird.

14. Verfahren nach Anspruch 13, **dadurch gekennzeichnet, dass** der Wirkungsgrad der Trennanordnung (6) so eingestellt ist, dass durch den Wasserstoffgehalt des Purgestroms (25) ein dem gasgefeuerten Einsatzstofferhitzer (26a-d) zugeführte Speisestrom (27) im Wesentlichen erdgasfrei ist.

15. Verfahren nach einem der Ansprüche 1 bis 14, **dadurch gekennzeichnet, dass** der Synthesegasstrom (5) prozesstechnisch der Shiftvorrichtung 15a-c nachgelagert einer Kohlenstoffdioxidwäsche (30) zum Auswaschen mindestens eines Teiles des Kohlenstoffdioxids aus dem Synthesegasstrom (5) zugeführt wird, insbesondere, dass in der Kohlenstoffdioxidwäsche (30) das Kohlenstoffdioxid durch ein Methanol umfassendes Waschmedium ausgewaschen wird.

16. Anlage zur Herstellung von Ammoniak (1) mit einer Synthesegasreaktoranordnung (4) zum Gewinnen eines Synthesegasstroms (5) mit Wasserstoff und Kohlenstoffoxiden aus einem kohlenstoffhaltigen Energieträgerstrom (3) durch eine autotherme Reformierung, mit einer Shiftvorrichtung (15a-c), der der Synthesegasstrom (5) zugeführt wird, wobei in der Shiftvorrichtung (15a-c) eine Wassergas-Shift-Reaktion zur Umsetzung zumindest eines Teils des Kohlenstoffmonoxids des Synthesegasstroms (5) mit Dampf des Synthesegasstroms (5) in Kohlenstoffdioxid und Wasserstoff stattfindet, einer prozesstechnisch der Shiftvorrichtung (15a-c) nachgelagert angeordneten Trennanordnung (6) zum Trennen zumindest eines Teils des Synthesegasstroms (5) in einen Wasserstoffstrom (7) mit Wasserstoff und in einen Kohlenstoffoxide aufweisenden Abgasstrom (8) und mit einer Ammoniak-Reaktoranordnung (10) zum Umwandeln zumindest eines Teils eines Wasserstoffstroms (7) und eines Stickstoffstroms (9) in Ammoniak (1), wobei die Anlage (2) eine prozesstechnisch der Synthesegasreaktoranordnung (4) vorgelagerte Sättigungsstufe (11) zur Zufuhr von in der Anlage (2) angefallenem vorgewärmten Kondensat (12) an den Energieträgerstrom (3) aufweist und wobei der Dampfanteil des Synthesegasstroms (5) bei Zuführung zu der Shiftvorrichtung (15a-c) zu mindestens 80 % bereits in der Synthesegasreaktoranordnung (4) vorhanden ist, **dadurch gekennzeichnet, dass** der Dampfanteil des Synthesegasstroms (5) bei Zuführung zu der Shiftvorrichtung (15a-c) zu mindestens 80 % auf das in der Sättigungsstufe (11) zugeführte Kondensat zurückgeht.
